# EUROPEAN PATENT SPECIFICATION

(11) **EP 2 043 458 B1**
(45) Date of publication and mention of the grant of the patent: **21.03.2012**
(21) Application number: 07784658.2
(22) Date of filing: 19.07.2007
(51) Int. Cl.: A23L 1/211, A23L 1/38, A23L 1/20, A23L 1/10, A23L 1/36, A23G 1/48

(54) **A SPREADABLE FOOD PRODUCT AND A MANUFACTURING PROCESS THEREFOR**
STREICHBARES NAHRUNGSMITTELPRODUKT UND HERSTELLVERFAHREN HIERFÜR
PRODUIT ALIMENTAIRE À TARTINER ET PROCÉDÉ DE FABRICATION DE CELUI-CI

(30) Priority: 19.07.2006 AU 2006903884 P
(43) Date of publication of application: 08.04.2009
(73) Proprietor: BLUE RIBBON ROASTING PTY LTD, Kenmore QLD 4069 (AU)
(72) Inventor: QUAIL, Ken, Lane Cove, New South Wales 2066 (AU); YUN, Hon, Denistone, New South Wales 2114 (AU); REMA, Gasiram, Mascot, New South Wales 2020 (AU)
(74) Representative: Wilson Gunn
(86) International application number: PCT/AU2007/001007
(87) International publication number: WO 2008/009061

(56) References cited:
- EP-A- 0 264 789
- EP-A- 1 174 042
- EP-A1- 0 834 260
- WO-A-2006/118778
- DE-A1-102006 037 608
- US-A- 4 515 818
- US-B1- 6 645 545
- AKASHA RICHMOND: "Sundance Chocolate Torte" HOLLYWOOD DISH, [Online] January 2006 (2006-01), pages 1.-3, XP002536324 www.electricpressrelease.com Retrieved from the Internet: URL:http://www.electricpressrelease.com/re leases/2006/jan-feb/hollywood.htm> [retrieved on 2009-07-07]
- ANONYMOUS: "Recipe Name: Shirlie's Pound Cake Icing" WWW.RECIPES.BGKULINAR.NET, [Online] 24 March 2004 (2004-03-24), pages 1-3, XP002536325 Online Retrieved from the Internet: URL:http://recipes.bgkulinar.net/recipe-Sh irlies+Pound+Cake+Icing-9704> [retrieved on 2009-07-07]
- GRETCHEN GRANT: "Bindae Duk (Korean Mung Bean Pancakes)" WWW.GRETCHENCOOKS.COM, [Online] 20 February 2006 (2006-02-20), pages 1-1, XP002536326 Online Retrieved from the Internet: URL:http://www.gretchencooks.com/recipes/1 0_Bindae_Duk_Korean_Mung_Bean_Pancakes> [retrieved on 2009-07-10]
- PULSE CANADA: "PRESENTATION TO THE SENATE COMMITTEE ON AGRICULTURE AND FORESTRY"[Online] 1 April 2004 (2004-04-01), pages 1-3, XP002536327 ww.parl.gc.ca Retrieved from the Internet: URL:http://www.parl.gc.ca/37/3/parlbus/com mbus/senate/Com-e/agri-e/witn-e/pulse-e.ht m> [retrieved on 2009-07-10]
- ANONYMOUS: "Particle sizes" THE ENGINIEERING TOOLBOX, [Online] 18 July 2006 (2006-07-18), pages 1-2, XP002536328 www.engineeringtoolbox.com Retrieved from the Internet: URL:http://web.archive.org/web/20060718053 056/http://www.engineeringtoolbox.com/part icle-sizes-d_934.html> [retrieved on 2009-07-08]
- PATENT ABSTRACTS OF JAPAN & JP 61 192260 A (NISSHIN OIL MILLS LTD ET AL) 26 August 1986
- PATENT ABSTRACTS OF JAPAN & JP 63 209555 A (HARAKI SHOKO KK) 31 August 1988
- PATENT ABSTRACTS OF JAPAN & JP 60 145058 A (NISHIDA KAZUO) 31 July 1985
- SUNBUTTER: 'Nutrition facts for SunButter products', [Online] XP008101901 Retrieved from the Internet: <URL:http://www.web.archive.org/web/2005112 5024634>

## Description

### FIELD OF THE INVENTION

The present invention relates to a spreadable food product. In particular, this invention relates to a process for the production of a nut-free spread.

### BACKGROUND OF THE INVENTION

Peanut butter and other nut-based spreads are immensely popular processed food products. Typically, whole peanuts are roasted and ground to form the basis of peanut butter. However, it is estimated that 0.5% of the population have an allergy to peanuts. A reaction to peanut allergen can range from mild to life-threatening anaphylactic reactions. Moreover, peanut-based spreads contain high levels of fat and thus not nutritionally desirable.

Due to the prevalence of peanut allergy, a need exists in the market to provide processed food products that are safe for consumption by peanut allergy sufferers. Considering this need, peanut butter like nut-free spreadable food products are not yet widely available. This dearth can be attributed to the difficulty in producing a nut-free product with peanut butter like characteristics. Trials of nut-free spreads in Canada, the USA and Europe have demonstrated that these products differ from peanut-based spreads in terms of texture, appearance and flavour. Several attempts have been made to alleviate these problems, all of which have been met with limited success.
EP 1 174 042 divulges a process for producing a spread from cowpeas, including subjecting the cowpeas to roasting and milling. Said document is silent on the temperature and duration of the roasting treatment.
US 6 645 545 discloses a process for preparing a spreadable dough from wheat or rye, wherein the grains are heated to between 200 and 350°C for 15 to 90 seconds, and then milled.
WO 2006/118778 shows a process for preparing a corn flour dispersion, including flash-drying at 190-230°C for 10 to 30 seconds, followed by milling.
US 4 515 818 relates to peanut butter substitutes based on sunflower seeds, which are roasted at 160°C for 10 to 40 minutes in order to achieve a peanut-like taste.
EP 0 264 789 relates to peanut butter substitutes based on soybeans, which are roasted for less than 5 seconds at between 150°C and 500°C in order to achieve a peanut-like taste.

### SUMMARY OF THE INVENTION

There exists a need in the market to provide food products which are safe for consumption for people with an allergy to food allergens such as peanut allergens. The present is broadly directed to a unique combination of processing steps which provides a nut-free spreadable food product with the characteristic nutty taste of conventional peanut butter-based spreads but with a lower fat content.

The invention provides a process of producing a substantially-nut free nutty flavoured spreadable food product, said process including the steps of:
(a) subjecting a non-nut plant material selected from the group consisting of a broad bean, a pea, a lentil, a mungbean and a cereal grain to roasting at a temperature between 180°C and 250°C for a period between 3 and 6 minutes; and
(b) grinding said roasted non-nut plant material to produce a flour with a mean particle size of less than about 100µm.

, Ginding occurs at a temperature of at least 45°C. Preferably, grinding is performed at a temperature of least 60°C.

Suitably, the grinding step in any one of the previous aspects includes a sifting step in order to achieve a flour with a mean particle size of less than about 100µm.

Preferably, the flour has a mean particle size of between 40µm and 85µm.

More preferably, the flour has a mean particle size of about 50µm.

The invention is broadly directed to a spreadable food product with the particular feature of being suitable for consumption by people with food allergies, and, in particular, nut allergies. Hence use of a plant material as the basis of the spreadable food product which either is allergen-free or has low-allergenicity is desirable. Suitably, the plant material is a non-nut plant material which includes, but is not limited to, a cereal grain and a legume selected from broad bean, pea, lentil, and mungbean.

Preferably, the cereal grain is rice.

This invention is particularly suited for processing of a non-nut plant material derived from a legume. selected from broad beans, peas, lentils and mungbeams.

The legume is not a peanut or any other nut.

In a preferred embodiments, the legume is is a mungbean.

According to other preferred embodiments, the legume is a pea. More preferably, the pea is a chickpea.

The elevated temperature is critical for achieving the desired nutty flavour. By way of example only, the elevated temperature can be achieved by roasting .

The roasting temperature is between 180°C and 250°C.

More preferably, the roasting temperature is about 200°C.

The duration of roasting is a further crucial factor for developing the required nut-like flavour. The roasting time ranges between 3 and 6 minutes.

Preferably, the roasting time is 3.5 to 4 minutes.

In a preferred embodiment, the invention provides for a nutritionally improved spreadable food product by including the step of germinating the non-nut leguminous plant material prior to production of the flour. Germination can be induced by wetting the crop kernel followed by incubation under controlled conditions.

Preferably, germination is performed under light-deprived conditions for a suitable period between 12 to 48 hours.

More preferably, germination is performed for about 24 hours. Suitably, germination is performed at room temperature.

The invention can provide a preadable food product produced using the Claimed method

The invention provides a spreadable food product comprising a non-nut plant material flour with a mean particle size of less than about 100µm.

Preferably, the spreadable food product produced according to the present invention further comprises an edible oil and a sweetening agent.

More preferably, the spreadable food product produced according to the present invention comprises an additive and a salt.

### BRIEF DESCRIPTION OF THE FIGURES

In order that the invention may be readily understood and put into practical effect, preferred embodiments will now be described by way of example with reference to the accompanying figures wherein like reference numerals refer to like parts and wherein:
**Figure 1** Organoleptic test result of 6 mungbean varieties.
**Figure 2** Objective measurement of the roasted mungbean powder (Roasting temperature: 200°C). **A.** Flour yellowness Minolta b* and **B.** Flour brightness Minolta L*.

### DETAILED DESCRIPTION OF THE INVENTION

The process of the present invention overcomes several major disadvantages of conventional approaches for the production of nut-free spreadable food products. Foremost is production of a flour appropriate for use as a nut substitute in a spreadable food product. Furthermore, the composition of the present invention is a spreadable food product with a nut-like taste which is free of peanuts and thereby safe for consumption by people with peanut allergy. The spreadable food product has the added benefit of a smooth texture.

As nuts cannot form the basis of nut-free spreads, an alternative source must be used. Commonly, a plant material forms the substantial component of peanut butter-like or nut-like spreadable food products. In the absence of peanuts or nuts, the plant material is the component upon which the desired nutty flavour is developed. Thus the invention is particularly suited to processes for the manufacture of a spreadable food product which utilise a non-nut plant material. The invention is as defined by the appended claims.

In those embodiments where it is desirable to produce an allergen-free spreadable food product, the invention contemplates the use of a non-nut plant material derived from a source which is considered devoid of food allergens. A person of skill in the art will readily appreciate that in particular embodiments where the spreadable food product is allergen-free, a particularly suitable plant material for an allergen-free spreadable food product is a cereal grain, and in preferred embodiments, the cereal grain is rice.

The spreadable food product of the present invention is particularly suited to a leguminous plant material that is not a nut and in particular, a legume that is not a peanut. Non-nut leguminous plant materials consist of broad beans, peas, lentils and mungbeans

Preferably, the non-nut leguminous plant material is a mungbean.

More preferably, the mungbean is a variety selected from of the group consisting of Berken, Celera, Delta, Emerald, Green Diamond and White Gold.

Most preferably, the mungbean variety is Emerald.

In other preferred embodiments, the non-nut leguminous plant material is a pea such as, but not limited to, a chickpea.

Thus in one broad form, the invention contemplates an allergen-free spreadable food product derived from a non-nut plant material such as a cereal grain, but is not limited thereto.

In another broad form, the invention contemplates a low-allergenic spreadable food product derived from a non-nut plant material. It is readily contemplated that this broad form encompasses a leguminous plant material.

Subjecting the non-nut plant material to an elevated temperature is the primary means by which the desired nutty flavour is produced. The parameters can be varied depending upon the colour and flavour requirement. The step of subjecting the non-nut leguminous plant material to an elevated temperature can be performed either in batch or in a continuous system. Advantageously, this step is performed in batch.

The combination of temperature and duration is paramount to achieve the nut-like characteristics in a nut-free spread. The processes of the invention contemplates roasting .

The temperature for roasting is between 180°C and 230°C. More preferably, the temperature for roasting is 200°C.

The duration of roasting varies between 3 and 6 minutes. Preferably, the duration of roasting is between 3.5 to 4 minutes.

As described hereinbefore, the non-nut plant material is present in the spreadable food product as a flour. In certain preferred embodiments, the flour is substantially-free of peanut allergen. Preparation of the flour is, *inter alia,* important for production of a nut-free spreadable food product with a smooth texture. Typically, although not exclusively, the flour is prepared by grinding the non-nut plant material, followed by sieving the ground plant material through a screen with a defined size to produce a flour with a constant average particle size.

The flour has an average particle size of less than about 100µm More preferably, the flour has an average particle size between 40µm and 85µm.

Even more preferably, the flour has an average particle size of about 50µm.

By "*substantially-free*" in the context of peanut allergen is meant a level of peanut allergen that will not cause an allergic reaction upon consumption of the spreadable food product. It will be appreciated that in those contexts where flour is derived from a non-nut plant material that is considered allergen-free such as rice, "substantially-free" may refer to peanut allergen or an alternative food allergen, but is not limited thereto.

Typically, although not exclusively, the non-nut plant material is a seed and as such, is composed of an embryo and a coat. In an alternative preferred embodiment of the invention, the coat is removed from the seed, and in particular the mungbean, prior to the roasting step. According to this embodiment, the coat comprises no greater than 1 % w/w of the final content of the spreadable food product.

In a preferred embodiment, the mungbean is germinated prior to processing, although a person of skill in the art will appreciate that many non-nut plant materials and in particular legumes, may undergo germination. Inclusion of a germination step increases the nutritional value of the spreadable food-product. Germination is a complex process that results in a number of significant biochemical changes in the seed. Generally, the conditions that support germination are adequate moisture, warm temperatures, and usually little or no light. Most seeds germinate best in the dark, although some require light. Germination can be induced by exposure of the non-nut plant material to moisture under controlled conditions. Preferably, germination is performed under light-deprived conditions at room temperature.

The duration of germination can vary. Preferably, germination is performed for between 12 to 48 hours. More preferably, germination is allowed to proceed for 24 hours.

It can be readily appreciated that the roasted flour substantially free of peanut allergen produced according to the processes of the present invention can form the foundation of a tasty and nutritional spreadable food product. It is contemplated that the composition of the spreadable food product of the present invention can be adapted to suit various taste requirements. In one embodiment, the spreadable food product of the present invention is a nut-free peanut butter substitute. In another embodiment, the spreadable food product of the present invention is a chocolate-flavoured nut-free spread.

A number of criteria must be considered when formulating a spreadable food product that fulfils the expectations of consumers. For instance, consumers desire a product with good spreadability that has a pleasant feel on the palate. Therefore, consistency and texture of the final product are equally as important as taste. As such, the composition must be a fine balance between the individual components of the spreadable food product.

The roasted flour substantially-free of peanut allergen imparts the nut-like flavour to the spread and as such, is a major component.

Preferably, the roasted flour is added to a final concentration of 30-65% w/w.

Edible oil is a substantial component of a spreadable food product composition. The oil component adds not only to the flavour but also to the spreadability of the final product. However, excessive oil content is not desirable from a dietary perspective. As such, a balance must be met between each consideration. The spreadable food product of the present invention is suited to any type of edible oil. It can be contemplated that animal or plant-derived oil can be incorporated into the composition. In a preferred form, the oil has relatively low levels of cholesterol, trans- and saturated-fats. Therefore, the invention is particularly suited to oil derived from plants. Non-limiting examples include oil derived from sources such as vegetable, sunflower, soybean, olive and canola.

Preferably, the oil is canola oil added to a final concentration between 18 and 40% w/w.

In order to provide a sweet flavour to the spreadable food product, a sweetening agent is included in the composition. Suitably, a sugar is used as the sweetening agent. A number of sugars are suitable for use. By way of example only, sugars contemplated by the invention include, but are not limited to sucrose, glucose, dextrose, fructose and invert. It is further contemplated that the sugar may be added as either a solid or liquid or indeed a combination thereof. It is also contemplated that a synthetic analogue of a sweetening agent may be used in the present invention.

Preferably, the sugar is a solid.

More preferably, the sugar is solid sucrose.

Even more preferably, the solid sucrose has an average particle size below 90µm.

Preferably, the sugar is added to a final concentration of between 0.05 and 15% w/w.

During production of a spreadable food product of the present invention, it is essential that the flour and oil components remain in a homogenous state after blending. Additives such as emulsifiers and stabilisers perform this function. Preferably, the additive is an emulsifier.

The emulsifier may be either natural or synthetic. Non-limiting examples of a suitable emulsifiers are lecithins, mono- and di-glycerides of fatty acids, esters of monoglycerides. Preferably, the emulsifier is polyglcerol added to a final concentration of between 2 and 3.5% w/w.

The presence of salt in processed food products may provide any one of a number of functions including, but not limited to, a flavour enhancer, a sweetener, a preservative and a flavour balancing agent. Because salt affects the way other tastes are perceived, it often can be added to food products to balance the flavour. Moreover, salt can increase and decrease sweetness, with the end result being both product- and level-dependent. Typically, although not exclusively, sodium chloride is the salt of choice.

Preferably, the salt is added to a final concentration of between 0.2 and 0.5% w/w.

In a preferred embodiment, the salt is added as a solid with an average particle size below about 100µm.

More preferably, the salt has an average particle size between 40µm and 90µm.

In one embodiment of the invention, the spreadable food product of the present invention is a nut-free peanut butter like spread. In the preferred form of this embodiment, the composition comprises 56.75% w/w mungbean flour, 35% w/w canola oil, 5% w/w icing sugar, 0.25% w/w salt, 3% w/w polyglycerol.

In an alternative embodiment of the spreadable food product of the invention, the composition may be adapted to incorporate a chocolate flavour to thereby produce a delicious chocolate nut-free spread.

The chocolate flavour may be added in a variety of ways. By way of example only, both pure cocoa powder and chocolate are suitable. Each component may be added alone or in combination.

It can be appreciated that most types of chocolate can be used, the choice of which being dependent upon the desired outcome. Chocolate is grouped by the amount of cocoa solids in the final product. That is, the level of content of cocoa solids increases through the progression from white to milk to dark chocolate. Traditionally, dark chocolate is used in cooking applications because of its higher cocoa solids content. Non-limiting examples of suitable types of dark chocolate include sweet, semi-sweet, bittersweet and unsweetened. Preferably, the chocolate is a sweet dark chocolate.

Preferably, the chocolate flavouring is added to a final concentration of between 10 and 35% w/w.

In another preferred embodiment, the chocolate flavouring is a combination of 10% chocolate and 10% cocoa powder.

According to the preferred form of this embodiment, the spreadable food product composition comprises 33 % w/w mungbean flour, 25% w/w canola oil, 13% w/w icing sugar, 0.25% w/w salt, 3.25% w/w polyglycerol and 27.52% w/w sweet dark chocolate.

So that the present invention may be more readily understood and put into practical effect, the skilled person is referred to the following non-limiting examples.

### EXAMPLES

### Example 1

Nut free spread was prepared having the following compositions, where the amounts are indicated as a weight percentage based on the total weight of the composition:

| | A | B | C |
|---|---|---|---|
| Mungbean* | 54.85 | 56.75 | 60 |
| Canola oil | 37 | 35 | 31.75 |
| Sugar | 4.9 | 5 | 5 |
| Salt | 0.25 | 0.25 | 0.25 |
| Additive | 3 | 3 | 3 |

| | | | |
|---|---|---|---|
| *Where the mung bean has been treated with any of the above processes. | | | |

For this example the preferred treatment would be mung bean flour reduced to a particle size of less than 85 microns and roasted at 200°C for 4 minutes. The roasted mung bean flour is then blended with the remainder of the ingredients.

The adjustment of the ratio of mungbean and canola in the example modifies the spreadability of the product and flavour. The higher mungbean addition of 60, provided the firmest texture and most intense nutty flavour.

### Example 2 (not according to the present invention)

Nut free chocolate spread was prepared having the following compositions, where the amounts are indicated as a weight percentage based on the total weight of the composition:

| | A | B | C |
|---|---|---|---|
| Mungbean* | 30.45 | 33 | 40.61 |
| Chocolate | 41.2 | 27.52 | 24.27 |
| Canola oil | 22.23 | 23 | 20 |
| Sugar | 2.74 | 13 | 11.62 |
| Salt | 0.14 | 0.25 | 0.25 |
| Additive | 3.25 | 3.25 | 3.25 |

| | | | |
|---|---|---|---|
| * Where the mung bean has been treated with any of the above processes. For this example the preferred treatment would be the steaming of mung bean flour or broken dehulled mung beans at 100°C for 35 minutes. The steamed mung bean is then blended with the other ingredients and at the completion of processing will have a particle size of less than 85 microns but preferably less than 50 microns. | | | |

The ratio of chocolate has a significant impact on the texture of the product. Increasing the ratio of chocolate increases the firmness of the product which reduces the ability to spread the product. The chocolate is temperature sensitive and at low temperatures the highest ratio of chocolate led to a solid product.

### Example 3 (not according to the present invention)

An alternative nut free chocolate spread will be prepared with the use of rice having the following compositions, where the amounts are indicated as a weight percentage based on the total weight of the composition:

| | A | B | C |
|---|---|---|---|
| Rice* | 25.45 | 28 | 30.61 |
| Chocolate | 41.2 | 27.52 | 24.27 |
| Canola oil | 22.23 | 23 | 20 |
| Sugar | 2.74 | 13 | 11.62 |
| Salt | 0.14 | 0.25 | 0.25 |
| Additive | 3.25 | 3.25 | 3.25 |
| Rice flour | 5.00 | 5.00 | 10.00 |

| | | | |
|---|---|---|---|
| * Whole or broken rice will be steamed for between 6 to 15 minutes depending on the particle size of the rice, at the completion of the steaming the rice starch is considered gelatinised. The steamed rice will then blended with the remainder of the ingredients with the particle size of the rice reduced to less than 50 microns. | | | |

The ratio of chocolate has a significant impact on the texture of the product. Increasing the ratio of chocolate increases the firmness of the product which reduces the ability to spread the product. The chocolate is temperature sensitive and at low temperatures the highest ratio of chocolate will lead to a solid product. Rice flour with a particle size less than 85 microns, but more preferably less than 50 microns will also blended with the spread. The proportion of rice flour will then be adjusted to control the rate of digestibility of the spread product where higher proportions of rice flour slow the digestion of the spread.

### Example 4

**Table 1 Objective measurement of roasted mungbean flour**

| Minolta colour of roasted mungbean powder (85micron) at 200C 3reps | | | |
|---|---|---|---|
| | b* | L* | a* |
| Raw | 19.89 | 96.04 | -2.09 |
| 4.5min | 21.84 | 92.01 | 0.62 |
| 5min | 22.95 | 90.1 | 1.85 |
| 5.25min | 22.77 | 82.94 | 2.75 |
| 6min | 24.9 | 26.3 | 3.76 |

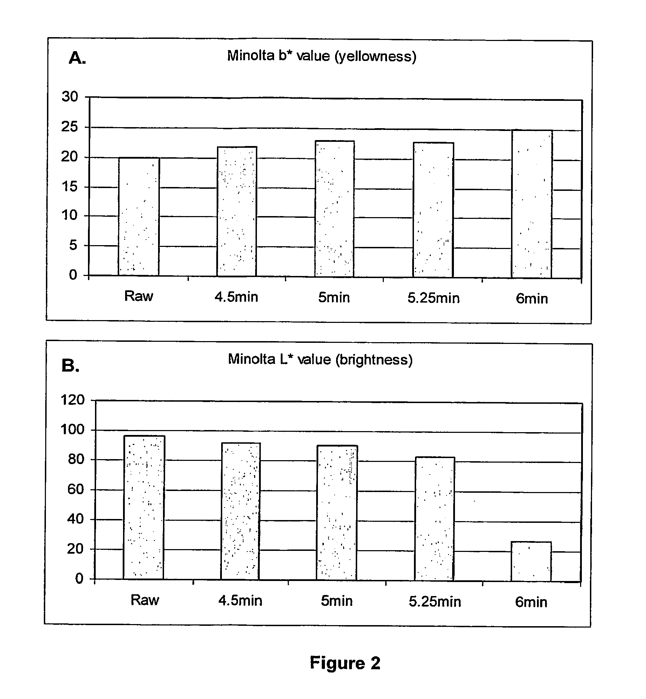

Table 1 and Figure 2 demonstrated that the colour of the flour reflects the degree of roasting. With increasing roasting time the flour becomes darker. There is a threshold at which the flour takes on a burnt flavour rather than further development of the peanut like flavour. After six minutes of roasting the flour has strong burnt flavours which are considered undesirable.

Roasting of flours at high temperature is used to developed the roasted flavour that is similar to peanut. However another consequence of roasting is the development of burnt flavours and darkening of the flour colour. The relationship between flour darkening and the development of burnt flavours is very strong. The aim of the roasting is to maximize roasted flavour without developing a burnt flavour. Monitoring of flour colour has been used to control the roasting treatment. In the following figures (2a and 2b) the change in flour colour during the roasting of mung bean flour has been measured with a Minolta Chroma Meter. In figure 2a the yellowness (b*) of the flour has been measured. It can be observed that flour yellowness increased with roasting time at 200°C. In Figure 2b the brightness (L*) of the roasted mungbean flour has been measured. As the roasting time at 200°C increases the brightness of the flour decreases. At 5.25 minutes the flour colour reaches a threshold and flour brightness rapidly deteriorates. It is important to stop the roasting process before this point is reached.

### Example 5

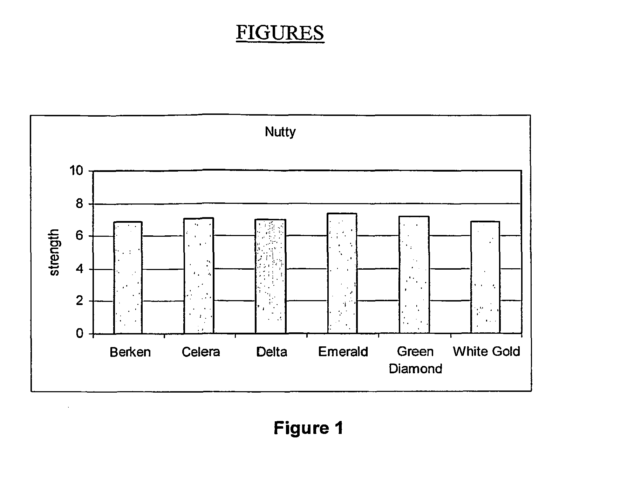

Figure 1 demonstrates that Mung bean varieties were found to demonstrate small differences in flavour when heat treated. The strongest nut flavour and therefore the most desirable mung bean for the use in this application was the variety Emerald. However all mungbean varieties tested produced acceptable flavour intensity expressed in Figure 1 as "strength".

## Claims

1. A process of producing a substantially-nut free nutty flavoured spreadable food product, said process including the steps of:
(a) subjecting a non-nut plant material selected from the group consisting of a broad bean, a pea, a lentil, a mungbean and a cereal grain to roasting at a temperature between 180°C and 250°C for a period between 3 and 6 minutes; and
(b) grinding said roasted non-nut plant material to produce a flour with a mean particle size of less than about 100µm.

2. The process of claim 1, wherein step (b) includes a sifting treatment.

3. The process of claim 1, wherein the mungbean is a variety selected from the group consisting of Berken, Celera, Delta, Emerald, Green Diamond, and White Gold.

4. The process of claim 1, wherein the non-nut plant material has undergone a germination step.

5. The process of claim 1, wherein the roasting temperature is about 200°C.

6. The process of claim 1, wherein the roasting period is 3.5 to 4 minutes.

7. The process of claim 1, wherein the flour has a mean particle size of between 40µm and 85µm.

8. The process of claim 7, wherein the flour has a mean particle size of about 50µm.

## Patentansprüche

1. Verfahren zum Herstellen eines im Wesentlichen nussfreien streichfähigen Nahrungsmittelprodukts mit Nussgeschmack, wobei das Verfahren die folgenden Schritte umfasst:
(a) Rösten eines nicht-Nuss Pflanzenmaterials, ausgewählt aus der Gruppe bestehend aus Puffbohne, Erbse, Linse, Mungbohne und Getreide, bei einer Temperatur zwischen 180°C und 250°C über eine Zeitdauer zwischen 3 und 6 Minuten und
(b) Mahlen des gerösteten nicht-Nuss Pflanzenmaterials um Mehl mit einer mittleren Partikelgröße von kleiner als etwa 100 µm herzustellen.

2. Verfahren nach Anspruch 1, wobei Schritt (b) eine Behandlung durch Sieben einschließt.

3. Verfahren nach Anspruch 1, wobei die Mungbohne eine Sorte, ausgewählt aus Berken, Celera, Delta, Emerald, Green Diamond und White Gold, ist.

4. Verfahren nach Anspruch 1, wobei das nicht-Nuss Pflanzenmaterial einen Schritt des Keimens durchlaufen hat.

5. Verfahren nach Anspruch 1, wobei die Rösttemperatur etwa 200°C beträgt.

6. Verfahren nach Anspruch 1, wobei die Röstdauer 3,5 bis 4 Minuten beträgt.

7. Verfahren nach Anspruch 1, wobei das Mehl eine mittlere Partikelgröße von zwischen 40 µm und 85 µm aufweist.

8. Verfahren nach Anspruch 7, wobei das Mehl eine mittlere Partikelgröße von etwa 50 µm aufweist.

## Revendications

1. Procédé de production d'un produit alimentaire à tartiner aromatisé à la noisette sensiblement dépourvu de noisette, ledit procédé comprenant les étapes consistant à :
(a) exposer un matériau végétal dépourvu de noisette choisi parmi le groupe consistant en une fève, un pois, une lentille, un haricot mungo et un grain de céréale à une torréfaction à une température comprise entre 180° C et 250° C pendant une période comprise entre 3 et 6 minutes ; et
(b) broyer ledit matériau végétal dépourvu de noisette torréfié pour produire une farine avec une taille de particule moyenne inférieure à environ 100 µm.

2. Procédé selon la revendication 1, dans lequel l'étape (b) comprend un traitement de tamisage.

3. Procédé selon la revendication 1, dans lequel le haricot mungo est une variété choisie parmi le groupe consistant en Berken, Celera, Delta, Emerald, Green Diamond, et White Gold.

4. Procédé selon la revendication 1, dans lequel le matériau végétal dépourvu de noisette a subi une étape de germination.

5. Procédé selon la revendication 1, dans lequel la température de torréfaction est d'environ 200° C.

6. Procédé selon la revendication 1, dans lequel la période de torréfaction est de 3,5 à 4 minutes.

7. Procédé selon la revendication 1, dans lequel la farine présente une taille de particule moyenne comprise entre 40 µm et 85 µm.

8. Procédé selon la revendication 7, dans lequel la farine présente une taille de particule moyenne d'environ 50 µm.
